# EUROPÄISCHE PATENTSCHRIFT

(11) **EP 3 834 171 B1**
(45) Veröffentlichungstag und Bekanntmachung des Hinweises auf die Patenterteilung: **15.04.2026**
(21) Anmeldenummer: 19752147.9
(22) Anmeldetag: 02.08.2019
(51) Int. Cl.: G06T 7/215, G06T 7/254

(54) **SPIELVERFOLGUNG**
GAME MONITORING
SUIVI DE JEU

(30) Priorität: 07.08.2018 DE 102018119170
(43) Veröffentlichungstag der Anmeldung: 16.06.2021
(73) Patentinhaber: Wingfield GmbH, 39112 Magdeburg (DE)
(72) Erfinder: KUPER, Henri, 30169 Hannover (DE); BURLAGE, Julius, 30169 Hannover (DE); BRUNKEN, Jaan, 30169 Hannover (DE); BURLAGE, Maik, 30169 Hannover (DE)
(74) Vertreter: Hernandez, Yorck
(86) Internationale Anmeldenummer: PCT/EP2019/070875
(87) Internationale Veröffentlichungsnummer: WO 2020/030542

(56) Entgegenhaltungen:
- US-A1- 2015 018 990
- US-A1- 2018 154 232

## Beschreibung

### Kurzdarstellung der Erfindung

Sportliche Aktivitäten sind für die körperliche Fitness kaum noch aus der Gesellschaft wegzudenken. Viele Sportler möchten sich jedoch nicht nur sportlich betätigen, sondern sich in ihrer entsprechenden Sportart verbessern, um bei kompetitiven Veranstaltungen konkurrenzfähig zu sein. Hierbei stellt in vielen Sportarten der Mangel an aussagekräftigen Daten über die eigene Leistung ein großes Problem dar, da ohne sie nur schwer Fehler und Verbesserungspotentiale gefunden werden können.

Aktivitätsüberwachungssysteme, beispielsweise für Ballsportarten wie Fußball, sind bekannt und umfassen beispielsweise Sensoren, die in den Ball eingearbeitet sind und seine Bewegungen erkennen. Diese Sensoren können beispielsweise mit der Hilfe eines magnetischen Felds, die Flugbahn und/oder die Position des Balles ermitteln, wie beispielsweise in der EP 2 657 924 A1 dargestellt.

Weitere Überwachungs- und/oder Informationssysteme im Ballsport bzw. Racket-Bereich sind sogenannte Smartcourt-Systeme. Die Bewegungsverfolgung der zumeist schnellen Objekte auf dem Spielfeld ist jedoch sehr schwierig und aufwendig, wodurch in vielen Fällen komplexe System verwendet werden, die eine Verfolgung des Objekts auf dem Spielfeld und dem 3D-Raum ermöglichen. Dadurch können unter anderem Entscheidungen im Spiel, wie beispielsweise "line-calls" beim Tennis, in Echtzeit erfolgen oder Statistiken über den Verlauf eines Sportereignisses erhoben werden. Diese komplexen Systeme umfassen oftmals mehrere und/oder bewegliche Kameras, welche die Verfolgung eines Objekts, wie beispielsweise des Balles, ermöglichen.

Das Smartcourt-System der WO 2013/124856 A1 beispielsweise umfasst eine Vielzahl an Videokameras, die in einer starren Positionierung angebracht sind. Über die Bildinformationen aus den verschiedenen Kameraperspektiven wird ein 3D-Modell des Platzes, des Balls und der Spieler erzeugt. Anhand der darin erfassten Bewegungen werden Schlüsse über die Schlagart, die Ballgeschwindigkeit und die Auftreffpunkte getroffen und können von den Sportlern eingesehen werden.

In der US9737784B1 handelt es sich um ein elektronisches Schiedsrichtersystem, bei welchem mehrere Kamera-Arrays in unterschiedlichen Höhen am Netzpfosten montiert sind. Objekte können nachverfolgt werden, da sie die Blickfelder der einzelnen Arrays zu unterschiedlichen Zeitpunkten durchqueren, woraus sich Rückschlüsse über deren Bewegungen treffen lassen.

Die WO 2017/100465 A1 offenbart ein System mit einer Kamera, die in der Nähe zum Pfosten angeordnet ist und beide Seiten des Spielfelds umfasst. Mittels eines Autokalibrierungsprozesses wird hierbei eine Spielfeldkarte erstellt, welche die Positionierung des Spielfeldes, des Netzes und/oder der Kamera beinhaltet. Dies ermöglicht eine Umrechnung der 2D-Koordinaten aus dem während des Spiels generierten Videobild in 3D-Koordinaten in der Spielfeldkarte.

Die US 2015 / 018990 A1 beschreibt ein Smart-Court-System, das sich an eine begrenzte Sportumgebung anpasst, um die Analyse und Nachbesprechung von Sportaktivitäten in Echtzeit zu ermöglichen. Das Smart-Court-System besteht aus: (i) einem automatischen Aufzeichnungssystem, das eine Vielzahl von Videokameras umfasst, die sich in einem Spielfeld befinden, die für die Echtzeit-Aufzeichnung (RT) einer Sportsitzung eingerichtet sind und ein automatisches Kalibrierungs- und Stabilisierungsmodul verwenden; und (ii) einem Datenverarbeitungssystem, das Folgendes umfasst: (a) ein Aufnahmemodul zum Erfassen eines Videostroms; (b) ein Objektdetektormodul, das so angeordnet ist, dass es während der RT-Sportsitzung die Objekte aus dem Vordergrund jedes Bildes extrahiert; (c) ein Ereignismodul zum automatischen Analysieren der Bewegung und der Aktivitäten der verfolgten Objekte, um Ereignisse automatisch zu identifizieren und zu klassifizieren, ein synchronisiertes Ereignisprotokoll zu erstellen und Statistiken zu berechnen, die während der RT-Sportsitzung aufgetreten sind; und (d) ein Präsentationsmodul, das es ermöglicht, eine sofortige Nachbesprechung, eine kombinierte biomechanische und taktische Analyse des Videos durchzuführen.

Die US 2018 / 154 232 A1 offenbart ein Linienrufgerät, welches eine einzige ortsfeste Kamera nutzt, um Objektzustandsbedingungen zu identifizieren, die Objektverfolgungsprobleme lösen, die andernfalls Lösungen mit mehreren Kameras oder beweglichen Kameras erfordern. Obwohl das Linienrufgerät im Zusammenhang mit einer automatisierten Vorrichtung zum Ausrufen von Tennislinien beschrieben wird, ist es auch auf andere Probleme der Objektverfolgung anwendbar, die durch die Identifizierung von Objektzuständen ohne den Einsatz von beweglichen oder mehreren Kameras gelöst werden können. Die Vorrichtung zum Ausrufen von Tennislinien ist am Netzpfosten eines Tennisplatzes angebracht, wodurch eine "Nahansicht" sowohl statischer (Spielfeldlinien) als auch sich bewegender (Ball, Spieler usw.) Objekte ermöglicht wird. In einer Ausführungsform bietet die Integration eines Videokamerasystems mit einer Linienanzeigefunktion zusätzliche Vorteile, einschließlich der Anbringung eines einzigen schlüsselfertigen Geräts an einem beliebigen Tennisnetzpfosten, um eine automatische Linienanzeigefunktion zu ermöglichen, ohne dass externe Videokameras oder Verarbeitungsfunktionen erforderlich sind.

Derzeitige Smartcourt Lösungen für Ballspiele und/oder Racket-Spiele sind daher komplex und teuer, wodurch Sportler, die nicht innerhalb des Profibereichs trainieren oder spielen, keine Möglichkeit besitzen ihre Spiele zu analysieren. Weiterhin bieten Systeme mit einer Kameraperspektive nicht die Möglichkeit Schlagarten, beispielsweise beim Tennis, zu analysieren. Außerdem sind bestehende Systeme nicht in der Lage den korrekten Spielstand zu ermitteln, wenn die Erfassung des Spielverlaufs vom System von den tatsächlichen Entscheidungen der Spieler unterscheiden.

Die Aufgabe der vorliegenden Erfindung ist es daher ein System, ein Verfahren und ein Computerprogrammprodukt zur Verfügung zu stellen, dass die oben genannten Nachteile ausräumt und auch Amateurspielern eine Möglichkeit bietet, ihre Spiele zu verfolgen und zu analysieren.

Die vorliegende Erfindung betrifft daher ein Verfahren zur Spielverfolgung, wie es in Anspruch 1 spezifiziert ist. In einer Ausführungsform erfolgt die Bestimmung des Spielfeldes mittels Kalibrierung, wobei einzelnen Punkte in einem zweidimensionalen (2D)-Bild einem bestimmten Punkt in einem zweidimensionalen (2D) Modell des Spielfeldes zugeordnet werden. In einer bevorzugten Ausführungsform erfolgt die Kalibrierung über eine Homographiematrix, in welcher mindestens vier Punkte verwendet werden, die im Bild und dem Modell korrelieren. In einer besonders bevorzugten Ausführungsform handelt es sich um vier Eckpunkte des Spielfeldes.

In einer Ausführungsform umfasst die Erkennung von Personen auf dem Spielfeld folgende Schritte:
a) Erzeugung mindestens eines Hintergrundbildes eines Spielfeldes;
b) Erzeugen eines Hintergrundmodells;
c) Trennung des jeden Hintergrundbildes von einem jeden aktuell aufgenommenen Bild, welches eine Person umfasst durch:
   i) Bestimmung einer absoluten Differenz zwischen dem Hintergrundmodel und dem aktuell aufgenommenen Bild, und
   ii) Erzeugen einer Vordergrundmaske,
wobei die Vordergrundmaske, dadurch gekennzeichnet ist, dass alle zum Vordergrund gehörenden Pixel den Wert 255 und die Pixel des Hintergrundes den Wert 0 besitzen. In einer bevorzugten Ausführungsform werden Pixel bei denen die Differenz größer als ein festgelegter Grenzwert als Vordergrund und Pixel mit geringerer Differenz werden als Hintergrund bestimmt.

In einer weiteren Ausführungsform der vorliegenden Erfindung wird der Gegenstand auf dem Spielfeld durch Bewegungen eines jeden aufgenommenen Bildes identifiziert. In einer bevorzugten Ausführungsform umfasst die Bestimmung der Bewegung folgende Schritte:
a) Erstellung von Differenzenbildern von aufeinanderfolgenden Bildern;
b) Berechnung von absoluten Differenzenbilder, bei denen eine Bewegung an zwei Stellen im Differenzenbild sichtbar ist, vorzugsweise handelt es sich um eine erste Position, an der sich das Objekt im vorherigen Bild befunden hat und eine zweite Position, an der das Objekt sich im aktuellen Bild befindet;
c) Erzeugen einer ersten Bewegungsmaske für das eine erste Differenzbild und einer zweiten Bewegungsmaske für das eine zweite Differenzbild; und
d) Erzeugen einer finalen Bewegungsmaske, die die Bewegungen, die in der einen ersten Bewegungsmaske und der einen zweiten Bewegungsmaske, umfasst.

In einer besonders bevorzugten Ausführungsform erfolgt die Konjunktion der einzelnen Pixel beider Bewegungsmasken mit einem bitweisen UND-Operator.

Die Flugbahn bzw. die Flugkurve des Gegenstands wird in einer Ausführungsform ermittelt, indem die folgenden Schritte durchgeführt werden:
a) Festsetzen eines ersten und eines zweiten Startpunktes einer potentiellen Kurve;
b) Kombinieren der potentiell festgesetzten Startpunkte mit allen potentiellen Gegenständen des zeitlich folgenden Bildes;
c) Überprüfen eines jeden Gegenstandes, ob dieser eine bereits vorhandene Kurve fortführt;
d) Ermitteln von Positionen des Gegenstandes in aufeinander folgenden Bildern
e) Vergleichen der Kurven aus a) und d);
f) Bestimmen eines Kurvenverlaufs; und
g) Klassifizierung der Kurve durch Bestimmung einer der Kurve folgenden zweiten Kurve.

In einer bevorzugten Ausführungsform werden Bildpunkte von Gegenständen, die mit Bildpunkten von Personen korrelieren, nicht berücksichtigt.

In einer weiteren Ausführungsform umfasst die Identifizierung von Ereignissen im Spielverlauf folgende Schritte:
a) Erfassung eines Auslöser Ereignisses;
b) Vergleich der Position mindestens einer Person und eines Gegenstandes mit dem Spielfeldmodell;
c) Abgleich mit einer Datenbank.

In einer bevorzugten Ausführungsform sind die Ereignisse in einem vorherigen Schritt in einem kategorisierten Datensatz erfasst worden, um den Abgleich mithilfe einer mit diesem Datensatz antrainierten künstlichen Intelligenz durchzuführen.

Eine Korrektur des im Spielverlauf berechneten Spielstandes umfasst in der vorliegenden Erfindung die folgenden Schritte:
a) Überwachung der möglichen Spielstände während des Spiels;
b) Prüfung der Verträglichkeit aller möglichen Spielstände mit den detektierten Ereignissen
c) Prüfung der Plausibilität der verbleibenden Spielstände.

Die vorliegende Erfindung betrifft weiterhin eine Vorrichtung zur Verfolgung mindestens eines Objektes und Spielers auf einem Spielfeld wie es in Anspruch 8 spezifiziert ist.

Weiterhin betrifft die vorliegende Erfindung ein Computerprogramm zum Durchführen eines zuvor beschriebenen Verfahrens, wenn das Computerprogramm auf einem Computer ausgeführt wird.

Die vorliegende Erfindung betrifft auch ein Computerprogrammprodukt
a) mit einem Speichermedium, auf dem ein zuvor beschriebenes Computerprogramm gespeichert ist; und/oder
b) das direkt in den internen Speicher eines digitalen Computers geladen werden kann und Softwarecodeabschnitte umfasst, mit denen die Schritte gemäß des oben beschriebenen Verfahrens ausgeführt werden, wenn das Produkt auf einem Computer läuft.

Die Aufgabe wird weiterhin durch die Ausführungsformen in den Ansprüchen gekennzeichnet und durch die Ausführungen in der Beschreibung, den Beispielen und den Zeichnungen näher beschrieben.

### Abbildungen

- Fig. 1: Schematische Darstellung einer Homographietransformation innerhalb der Felderkennung
- Fig. 2: Schematische Darstellung der Kurvenermittlung.
a) Differenzbild t; b) Differenzbild t+1; c) Auftreffpunkt; d) Differenzbild t+2;
e) Differenzbild t+3; f) Schlag
- Fig. 3: Schematische Darstellung eines Programmablaufs für ein Tennismatch
- Fig. 4: Schematische Überprüfung auf Verträglichkeit im Spielverlauf mittels Scoring Tree

### Detaillierte Darstellung der Erfindung

Die vorliegende Erfindung betrifft ein Verfahren, eine Vorrichtung, ein Computerprogramm sowie ein Computerprogrammprodukt zur Verfolgung eines Objekts auf einem statischen Spielfeld. Bei dem Objekt kann es sich um jedes erdenkliche Objekt in einem Spiel handeln, wie beispielsweise einen Handball, einen Fußball, einen Tennisball, einen Federball oder ähnliche. In einer bevorzugten Ausführungsform der vorliegenden Erfindung handelt es sich um einen Ball der im Racket-Sport Verwendung finden. In einer besonders bevorzugten Ausführungsform handelt es sich bei dem Ballspiel um Tennis.

Nachfolgend wird zur Vereinfachung der Beschreibung, die Erfindung im Hinblick auf ein Tennisspiel umfassend ein Tennisfeld, ein Tennisball, einen Tennisspieler und einen Tennisschläger dargestellt. Dies ist jedoch repräsentativ für andere Sportarten bei welchen ein Spielfeld, mindestens ein Spieler und ein Gegenstand, wie beispielsweise ein Ball, umfasst sind. Des Weiteren wird die Verwendung von "ein" oder "eine" eingesetzt, um ein oder mehrere Elemente, Komponenten, Schritte, Module und/oder Dinge zu beschreiben. Diese Begriffe sollten derart gedeutet werden, dass sie eins oder mindestens eins umfassten und der Singular auch den Plural umfasst, es sei denn, dass dies offensichtlich anders gemeint ist.

Die Erfindung betrifft ein Verfahren zur Verfolgung einer Person und/oder Gegenstandes auf einem Spielfeld. Das Verfahren umfasst dabei die Schritte der Felderkennung, der Personenerkennung, der Gegenstandserkennung, der Kurvenerkennung, der Ereigniserkennung und des Backward Scoring. Diese Schritte werden im Folgenden näher erläutert und werden auf geeigneten Mitteln ausgeführt, wie einem beispielsweise einem Datenverarbeitungssystem oder eines Computers.

Die Felderkennung, d.h. die Bestimmung oder Initialisierung des Spielfeldes, dient der Kalibrierung, damit die Informationen aus zweidimensionalen (2D) Bildaufnahmen in ein anderes zweidimensionales (2D) Bild, dem Spielfeldmodell, projiziert werden können. Diese Informationen umfassen beispielsweise Auftreffpunkte und/oder Aufenthaltsorte mindestens eines Spielers. In einer bevorzugten Ausführungsform der vorliegenden Erfindung erfolgt die Kalibrierung über eine Homographiematrix. Diese beschreibt die Translation, Rotation und Verzerrung von ein und derselben planaren Oberfläche, z.B. dem Spielfeld, in zwei beliebigen Bildern. Zur Berechnung der Homographiematrix werden vorzugsweise mindestens vier Punkte aus der Bildaufnahme verwendet, die mit vier Punkten im Modellbild korrelieren. Vorzugsweise werden die vier Eckpunkte des Einzelfeldes, beispielsweise im Tennis verwendet, die entweder vom Benutzer vorher ausgewählt wurden oder die durch Bildverarbeitungsverfahren berechnet wurden. Dabei kann es sich um übliche Verfahren der Bildverarbeitung oder aus dem maschinellen Lernen handeln. Ein Beispiel aus der Bildverarbeitung wäre z.B. die Kantendetektion, bei der innerhalb eines Bildes mithilfe verschiedener mathematischer Operatoren (Kantenfilter) wie z.B. Laplace-Filter, Sobel-Operator, Scharr-Operator Abgrenzungen zwischen unterschiedlichen Flächen (z.B. Linien auf einem Spielfeld) erkannt werden können. Durch die Berechnung der Schnittpunkte von erkannten Linien können dann die Eckpunkte des Spielfeldes berechnet werden. Ein beispielhaftes Verfahren aus dem maschinellen Lernen wäre ein Convolutional Neural Network (CNN), welchem wiederrum ein zuvor klassifizierter Datensatz vorliegen muss. Ein Convolutional Neural Network ist ein an die biologische Funktionsweise eines Gehirns angelehntes Netz aus Neuronen, welches auf maschineller Ebene implementiert ist. Dabei werden lokalisierte Merkmale aus Eingangsbildern extrahiert und falten diese Bildfelder mittels Filtern auf. Der Eingang zu einer Faltungsschicht ist ein m x m x r Bild, wobei m die Höhe und Breite des Bildes ist und r die Anzahl der Kanäle ist. Beispielsweise hat ein RGB-Bild r = 3 Kanäle. Diese Daten werden durch mehrere Schichten übergeben und immer wieder neu gefiltert und unterabgetastet

In einem weiteren Schritt des vorliegenden Verfahrens werden Personen, die sich auf dem Spielfeld befinden identifiziert. Die Begrifflichkeiten Spieler, Teilnehmer, Personen und/oder Menschen werden in der Beschreibung austauschbar verwendet und bezeichnen, alle Menschen oder nicht-Menschen, wie Tiere, die sich auf dem Spielfeld befinden. Im Gegensatz zu den Objekten, bei denen es sich um nichtlebendige Gegenstände handelt. Die Erkennung mindestens eines Spielers oder eines anderen Teilnehmers erfolgt unter Zuhilfenahme eines sogenannten Hintergrundsubtraktionsverfahren (Background Subtraction). Dieser Subtractor dient der Trennung von Objekten im Vordergrund zu Objekten im Hintergrund eines Bildes sowie einer Überprüfung der Objekte im Hinblick auf Ihre Gestalt. Zur Erstellung eines Hintergrundmodells für die Background Substraction wird mindestens ein Bild des leeren Spielfeldes aufgenommen. Im weiteren Schritt wird mit diesem Hintergrundbild, d.h. das leere Spielfeld, mit dem bekannten "Mixture of Gaussians Background Subtractor" initialisiert und ein Hintergrundmodell errechnet. Bei dieser Technik wird angenommen, dass die Intensitätswerte eines jeden Pixels im Video mit dem "Mixture of Gaussians"-Verfahren modelliert werden können. Eine einfache Heuristik bestimmt, welche Intensitäten am wahrscheinlichsten im Hintergrund liegen. Dann werden die Pixel, die nicht mit diesen übereinstimmen, die Vordergrundpixel. Bevorzugt werden zur Berechnung und Modellierung des Hintergrundes mehrere von dem Bildsystem aufgenommene Bilder verwendet, um den Hintergrund zu aktualisieren. In einer bevorzugten Ausführungsform erfolgt eine Aktualisierung alle 20 aufgenommenen Bilddaten, wobei stetige Differenzen zwischen dem aktuellen Bild und dem Hintergrundmodell in das Hintergrundmodell übernommen werden. Dadurch wird sichergestellt, dass konstante Änderungen im Hintergrund nicht als Vordergrund und somit potenziell als Menschen detektiert werden.

Für die Personenerkennung wird in einer Ausführungsform der vorliegenden Erfindung für jedes von dem Bildaufnahmesystem generierte Bild, eine Trennung des Vorderbildes und Hintergrundbildes durchgeführt. Hierbei entsteht eine Vordergrundmaske, die besonders bevorzugt dadurch gekennzeichnet ist, dass alle zum Vordergrund gehörenden Pixel den Wert 255 haben und die Pixel des Hintergrundes den Wert 0 haben. Um dies zu erreichen wird von einem Computer die absolute Differenz zwischen dem Hintergrundmodel und dem aktuell aufgenommenen Bild des Bildaufnahmesystems berechnet. Mit der Verwendung der absoluten Differenz lassen sich die Unterschiede zweier Bilder wiedergeben, wobei die absolute Differenz den absoluten Wert der Differenz beider Bilder angibt. In einer bevorzugten Ausführungsform werden Pixel bei denen die Differenz größer als ein festgelegter Grenzwert ist als Vordergrund angesehen. Pixel mit geringerer Differenz werden dabei als Hintergrund angesehen. Bei den extrahierten Objekten aus der Vordergrundmaske handelt es sich um potenzielle Menschen. Mittels einer auf dem Computer oder sonstigem Medium enthaltenen Datensammlung und/oder Abgleich mit Daten im Internet werden die Objekte anhand ihrer Höhe, Breite, Fläche und/oder Position im Bild untersucht und/oder verglichen und als Mensch oder nicht-Mensch klassifiziert.

Im folgenden Verfahren wird mittels der in der Felderkennung generierten Homographiematrix und der in der Objekterkennung klassifizierten untersten Pixels eines Menschen oder nicht-Menschen ermittelt an welcher Position sich das Objekt sich 2D Model des Spielfeldes befindet.

Neben der Objekterkennung werden in einem weiteren Schritt der vorliegenden Erfindung Gegenstände auf dem Spielfeld mittels des Bildaufnahmesystems detektiert. Der Begriff "Gegenstände" wird austauschbar mit dem Begriff "Ball" oder "Ballobjekt" verwendet und umfasst alle geeigneten Gegenstände, die in gleicher Weise wie ein Ball, beispielsweise in Rückschlagspielen, Torspielen und/oder Schlagballspielen Verwendung finden. Der Gegenstand benötigt hierbei keine bestimmte Form, sondern ist von seiner Eignung abhängig. Gegenstände oder Bälle, umfassen, sind jedoch nicht beschränkt auf die folgende Auflistung: Tennisbälle, Federbälle, Flugscheiben, Fußbälle, Volleybälle, u.a. Dementsprechend kann der Ball rund, oval, scheiben- oder ringförmig, mit Griffen oder Flugstabilisatoren (Federn) ausgestattet, geflochten, durchbrochen, mit beweglicher Füllung versehen, hohl oder massiv sein.

Zu Detektion der Bewegung der Bälle werden Bewegungen in Bildern des Bildaufnahmesystems untersucht. Hierzu werden Differenzenbilder von aufeinanderfolgenden Bildern aus dem Bildaufnahmesystem erstellt, wodurch bewegungsbedingte Änderungen zwischen den Bildern detektiert werden können. Um den Gegenstand vor unterschiedlichen Hintergründen erkennen zu können, werden in einer Ausführungsform absolute Differenzenbilder zwischen aufeinander folgenden Bildern erstellt. Wenn der Ball sich durch das Sichtfeld des Bildaufnahmesystems bewegt, bewegt dieser sich an unterschiedlichen Hintergründen vorbei, die heller, wie zum Beispiel Lampen, Sonne oder dunkler, wie beispielsweise Boden oder Wände, als der Ball sein können. Mithilfe der absoluten Differenzen wird eine Bewegung immer an zwei Stellen im Differenzenbild sichtbar gemacht. Bei diesen Stellen handelt es sich vorzugsweise um eine erste Position, an der sich der Ball im vorherigen Bild befunden hat und eine zweite Position, an der der Ball sich im aktuellen Bild befindet. Dementsprechend wird das Verschwinden des Balles auf einem ersten Bild und sein Auftauchen detektiert.

In einer Ausführungsform wird vorzugsweise die ausschließliche Bewegung auf einem aktuellen Bild zum Zeitpunkt t = 1 (folgend Bild 1) erfasst. Hierfür werden zunächst alle Bewegungen, d.h. das Auftauchen und das Verschwinden des Balles ermittelt. Die Ermittlung erfolgt in einem ersten Schritt durch die Erzeugung eines Differenzenbildes von einem Anfangsbild (folgend Bild 0) und dem Bild 1. Hierdurch wird das Verschwinden des Balles von einer ersten Position in Bild 0, an dem sich der Ball befand, und das Auftauchen des Balles in Bild 1 in einer zweiten Position, an der der Ball sich in befindet, erkannt. In einer weiteren Ausführungsform wird ein zweites Differenzenbild (Differenzenbild 2) zwischen dem Bild 1 und einem zweiten Bild (folgend Bild 2) erzeugt. Das Differenzialbild 2 detektiert das Verschwinden des Balles von Bild 1 zu Bild 2 und das Auftauchen dieses auf dem Bild 2.

In einem weiteren Schritt der Gegenstandserkennung werden für das eine erste und das eine zweite Differenzenbild Bewegungsmasken erzeugt, die im Folgenden als Bewegungsmaske 1 und Bewegungsmaske 2 gekennzeichnet werden. In diesen Bewegungsmasken erhalten alle Pixel, bei denen der Wert der absoluten Differenzen über einem festgelegten Schwellwert liegt, den Wert 255. Alle Pixel die unterhalb des festgelegten Schwellenwerts liegen, erhalten den Wert 0. Ein vorgegebener Wert, wie beispielsweise ein vorgegebener Schwellenwert, ist hierbei ein Festwert und/oder ein Wert, der zu einem beliebigen Zeitpunkt vor der Durchführung einer Berechnung, die einen bestimmten Wert mit dem vorgegebenen Wert vergleicht, bestimmt wird. Dementsprechend weisen Bewegungen in den Bewegungsmasken und die ihnen entsprechenden Pixel den Wert 255 auf. Im folgenden Schritt wird eine finale Bewegungsmaske (Bewegungsmaske 3) erzeugt. Diese finale Bewegungsmaske 3 enthält die Bewegungen, die in der einen ersten Bewegungsmaske 1 als auch in der einen zweiten Bewegungsmaske 2 auftauchen. In einer bevorzugten Ausführungsform der vorliegenden Erfindung erfolgt die Erstellung der finalen Bewegungsmaske unter Verwendung einer logischen Konjunktion der einzelnen Pixel beider Bewegungsmasken, vorzugsweise mit einem bitweisen UND-Operator. Durch eine solche finale Bewegungsmaske 3 wird eine Extraktion potentieller Gegenstände, wie Bälle möglich. In einer bevorzugten Ausführungsform wird bei den extrahierten Ballobjekten unterschieden, ob diese sich innerhalb eines erkannten Menschen befinden oder außerhalb desselbigen. Dies hat insbesondere in einer Kurvenerkennung eine besondere Bedeutung, da die Bewegung von potentiellen Gegenständen innerhalb eines erkannten Menschen zumeist durch den Menschen und nicht den Gegenstand, beispielsweise den Ball, erfolgen.

In einer weiteren Ausführungsform der vorliegenden Erfindung wird die Flugbahn bzw. die die Flugkurve des Gegenstands ermittelt. Hierbei wird angenommen, dass der Gegenstand eine Kurve starten als auch eine Kurve fortführen kann. Alle potenziellen Gegenstände, die durch das Bildaufnahmesystem und/oder das Bildverarbeitungssystem nicht innerhalb eines erkannten Menschen detektiert werden, werden hierbei als potenzielle Startpunkte einer neuen Kurve festgesetzt. In einem nächsten Schritt werden diese potentiell festgesetzten Startpunkte mit allen potenziellen Gegenständen des zeitlich folgenden Bildes kombiniert. Beispielsweise werden die in einem ersten Bild aufgezeichneten Ballobjekte A und B ermittelt. Dementsprechend erfolgt eine Erzeugung der dazugehörigen Kurven 1(A) und 2(B). In einem zweiten Bild werden die zwei potentiellen Ballobjekte C und D ermittelt. Auf Grundlage der im zweiten Bild erzeugten Kurven, werden die folgenden Kurven erzeugt: 1(A, C), 2 (A, D), 3 (B, C), 4(B, D). In einer besonders bevorzugten Ausführungsform werden zwei weitere Kurven 5(C) und 6(D) erzeugt, da, wie zuvor beschrieben jeder Gegenstand eine neue Kurve starten darf.

In einem folgenden Schritt der Erkennung der Flugbahn wird jedes potenzielle Ballobjekt überprüft, ob es eine bereits vorhandene Kurve mit zwei oder mehr Ballobjekten fortführt. Um eine solche Überprüfung der Flugkurven zu durchzuführen, werden Positionen des Balles auf einander folgenden Bildern ermittelt und mit der vorhandenen Kurve, die mittels des einen ersten und eines zweiten Startpunktes festgelegt wurde, verglichen. Die Überprüfung erfolgt vorzugsweise zusätzlich unter Verwendung von Daten zur Flugrichtung des Balles im Raum und/oder dessen Beschleunigung. Diese Daten, d.h. die Flugrichtung sowie Beschleunigung lassen sich durch die Aneinanderreihung von drei Objektpunkten berechnen und ermöglichen somit eine Vorhersage der Position des folgenden Ballobjektes im Bild. Jeder Ball der der sich in der Nähe der ermittelten vorhergesagten Position befindet, wird hierbei der berechneten Kurve hinzugefügt, bis diese einen Start und Endpunkt aufweist.

Ballobjekte, die innerhalb des Menschen ermittelt werden, d.h. deren Pixel mit den Pixeln eines Menschen korrelieren werden in einer besonders bevorzugten Ausführungsform nicht zur Erstellung neuer Kurven herangezogen, da wie bereits zuvor ausgeführt, eine dort befindliche Bewegung unter Umständen durch den Menschen selbst sowie seine Bewegung und nicht durch den Gegenstand, also den Ball, selbst hervorgerufen werden kann. Ballobjekte in solchen Positionen, d.h. im korrelierenden Bereich von erkannten Menschen, können jedoch bei der Ermittlung der Kurve, d.h. für die Kurvenfortführung und deren Prädiktion verwendet werden.

Die Erstellung neuer Kurven für jedes identifizierte potenzielle Ballobjekt führt zu zahlreichen potentiellen Kurven, bei denen zahlreiche mehrfach vorhanden sind. Um diese Redundanz zu verhindern, wird in einer Ausführungsform der vorliegenden Erfindung nach jedem verarbeiteten Bild eine Prüfung durchgeführt. Bei einer solchen Prüfung werden identische oder ähnliche Kurven ermittelt, erkannt und anschließend aus den Rechendaten gelöscht. In einer bevorzugten Ausführungsform der vorliegenden Erfindung werden zusätzlich Kurven mit weniger als acht ermittelten Ballpositionen, vorzugsweise mit weniger als sechs, besonders bevorzugt mit weniger als vier ermittelten Ballpositionen auch aus den Rechendaten gelöscht. Die Löschung der Datensätze mit wenigen tatsächlich ermittelten Ballpositionen vermindert ein Rauschen, das unter Umständen zu einer verfälschten tatsächlichen Kurvenermittlung führen könnte.

Nach einer vollständigen Detektion mehrerer Kurven, die in ihrer Art unterschiedlich sein können, werden diese in einer Ausführungsform der vorliegenden Erfindung klassifiziert. Die Klassifizierung erfolgt in Abhängigkeit von der Sportart. Hierbei werden vorzugsweise Datensätze von in der Sportart üblichen Kurven- und Flugbahnen hinterlegt und mit den ermittelten Kurven aus dem Bildaufnahmesystem verglichen. Im Beispiel des Tennissports werden die Kurven in unterschiedliche Klassen wie Schlag, Aufschlag, Auftreffpunkt, über Netz, Ende der Rally usw. eingeordnet. Die Begriffe "Klassifizierung" oder "Charakterisierung" werden hier austauschbar verwendet und beschreiben hierbei die Kennzeichnung einer Kurve nach Art, Flugbahn und ggf. Ereignis, wie beispielsweise den Aufschlag, einen Elfmeter oder einen Freiwurf. Die Klassifizierung einer Kurve (folgend K1) erfolgt durch die Bestimmung einer dieser nachfolgenden Kurve. Um die der K1 folgende Kurve zu bestimmen, wird mindestens eine nach der K1 ermittelte Kurve überprüft und die Kurve, die als zugehörige Nachfolgekurve (K2) bestimmt, vorzugsweise werden alle der K1 folgenden Kurven als potentielle zugehörige Nachfolgekurve (K2') der K1 überprüft. In einer bevorzugten Ausführungsform werden alle Kurven (K2') überprüft, die zu einem späteren Zeitpunkt, aber weniger als 30 Bilder später beginnen. In einer besonders bevorzugten Ausführungsform wird die Kurve, die räumlich und zeitlich kombiniert den geringsten Abstand zur K1 hat, als zugehörige Nachfolgekurve K2 festgelegt.

In einer Ausführungsform wird zusätzlich für die Nachfolgekurve (K2) eine zugehörige Vorgängerkurve (K1) unter den gleichen Kriterien wie zuvor zur Nachfolgekurve K2 dargestellt, ermittelt. Ein solcher Abgleich der Kurven verhindert, dass Kurven, die auf anderen Spielfeldern erzeugt werden, als Kurve des richtigen Spielfeldes charakterisiert werden.

Nach einem entsprechenden Abgleich der Kurven K1 und K2, d.h. wurde K1 als Vorgänger für K2, und umgekehrt K2 als Nachfolger für K1 bestimmt, werden für die folgende Charakterisierung Richtungen, Richtungsänderungen und/oder Winkel zwischen den Kurven erfasst und mit festgelegten Mustern aus einer Datenbank verglichen. Bei einer entsprechenden Datenbank kann es sich hierbei um die Zusammenstellung eigener Datenbestände handeln, die intern (lokal) auf dem System gespeichert sind oder extern auf Speichermedien aufgeführt sind. Weiterhin kann eine solche Datenbank auch in einem cloudbasierten Speicher, einem Netzwerk oder dem Internet abgerufen werden.

In einer Ausführungsform der vorliegenden Erfindung werden die durch das Bildaufnahmesystem und Bearbeitungssystem ermittelten und bestimmten Kurven zur Festlegung von Ereignissen, auch "Events" genannt, im Spiel verwendet. Hierbei werden einzelne Ereignisse im gesamten Spielverlauf bestimmt und eingeordnet. Die Ereignisse im Spielverlauf umfassen, sind jedoch nicht begrenzt auf die folgende Aufzählung, Anfang und Ende jeder Rally oder eines Spiels, Aufschlagseitenwechsel oder Spielerseitenwechsel, Satzende und Beginn eines Tie-Breaks, Freistoß, Elfmeter, Freiwurf, Pitch, Strick, Foul, u.a. Wie bereits zuvor erläutert, wird zur Vereinfachung die Event- oder Ereigniserkennung anhand eines Tennisspiels erläutert. Die Ereignisse oder Events werden auch als auslösende Ereignisse bezeichnet. Diese auslösenden Ereignisse werden innerhalb einer Datenbank gespeichert und innerhalb dieser kategorisiert.

Der Anfang einer Rally ist durch den Aufschlag eines Spielers charakterisiert, weshalb bei der Eventerkennung auf eine Kurve gewartet wird, die als Aufschlag charakterisiert wurde. Beim Auftreten dieser Aufschlagkurve wird über die Standposition des zugehörigen Spielers zunächst geprüft, ob der Aufschlag auf dem richtigen Tennisplatz detektiert wurde und anschließend wo sich die beiden Spieler zum Zeitpunkt des Aufschlages befunden haben. Eine solche Positionserkennung der Spieler erfolgt hierbei mithilfe des Bildaufnahmesystems und der bereits zuvor beschriebenen Objekterkennung. Diese örtliche Information der Spieler gibt in einer weiteren Ausführungsform im Anschluss im Hinblick auf den Punktestand Aufschluss darüber, ob der aktuelle Punktestand geraden oder ungeraden Spielen geordnet werden kann und für die Statistik, ob es sich um einen zweiten Aufschlag handelt (Zwei Aufschläge in Folge von der gleichen Position). Nach Erkennen eines solchen Rallystarts werden in einer bevorzugten Ausführungsform weiteren Ereignissen im Spiel ermittelt. Diese können beispielsweise ein Auftreffpunkt nach einem Aufschlag sein. Ein solcher Auftreffpunkt im Tennis muss je nach Position des aufschlagenden Spielers sich in einem anderen Teil des Feldes befinden. Dieser Auftreffpunkt, bzw. dieses Ereignis gibt Aufschluss darüber, ob es wahrscheinlich ist, dass ein zweiter Aufschlag folgt. In einer bevorzugten Ausführungsform wird bei jedem ermittelten Ereignis überprüft, ob dieses Ereignis auf dem richtigen Spielfeld erfolgt ist und/oder ob dieses innerhalb des Spielfeldes, d.h. der Spielfeldlinien, erfolgt ist. Eine solche Ermittlung, ob das Ereignis innerhalb oder außerhalb des Spielfeldbereiches stattgefunden hat, wird die Ball und/oder Spielerposition mit den ermittelten Felddaten abgeglichen. In einer bevorzugten Ausführungsform wird zusätzlich auf Grundlage der Entfernung des erkannten Auftreffpunktes zu den Spielfeldbegrenzenden Linien eine Wahrscheinlichkeit erfasst, mit der die Entscheidung des Systems korrekt getroffen wurde. Je näher sich der Auftreffpunkt an den Linien befindet, desto geringer ist dabei die Wahrscheinlichkeit.

Die Erkennung der Ereignisse sowie Position der Spieler und Bälle erfolgt dabei in einer Ausführungsform der vorliegenden Erfindung im Spielfeldmodell statt, wobei die Auftreffpunkte und Standpositionen mit Hilfe der in der Kalibrierung bestimmten Homographiematrix in die Ebene des Tennisplatzmodels transformiert werden. Ereignisse, wie beispielsweise Bälle die über das Netz fliegen als auch das Ende der Rally durchlaufen vorzugsweise auch eine Prüfung, bei der ermittelt wird, ob der zugehörige Spieler sich im richtigen Feld befindet. Weiterhin werden in einer bevorzugten Ausführungsform Schläge entsprechend eines Datensatzes charakterisiert. Dieser Datensatz für Schläge kann generelle lokale Datenbanken umfassen, externe Informationen aus Netzwerken oder dem Internet oder eine sich selbst generierende Datensammlung umfassen. Vorzugsweise handelt es sich bei dem Datensatz für Schläge um eine Sammlung von Daten, welche aus vorangegangen Aufnahmen extrahiert und kategorisiert worden ist. Die Extraktion der Daten kann sowohl auf lokale Speichermedien als auch auf Speichermedien in lokalen Netzwerken oder dem Internet erfolgen.

In einer solchen Datensammlung sind zudem Ereignisse, wie beispielsweise ein Aufschlagseitenwechsel, gespeichert, der immer zu Beginn eines neuen Spiels stattfindet und ein spielbeendendes Event darstellt. Zusätzlich kann eine Bestätigung dieses Ereignisses dadurch erfolgen, dass ein Spieler, der die vorherigen Aufschläge nicht durchgeführt hat, mehrere Aufschläge nacheinander durchführt. Diese spielbeeinflussenden Ereignisse werden auch auslösende Ereignisse bezeichnet. Gleiches gilt für Seitenwechsel, die ebenfalls ein spielendendes Event darstellen. Zusätzlich können alle Ereignisse in einer Ausführungsform der vorliegenden Erfindung durch einen Spieler oder eine dritte Person eigenständig durch Eingabe gekennzeichnet und dadurch charakterisiert werden. Eine solche Eingabe durch den Benutzer kann automatisiert zu einer Aktualisierung der in der Datenbank gespeicherten Datensammlungen führen. Weiterhin können in einer weiteren Ausführungsform Elemente vorgesehen sein, die eine manuelle Eingabe eines Ereignisses ermöglichen, wie beispielsweise das Ende eines Matches. Hierfür können beispielsweise Fernbedienungen, Smartphones, Knöpfe, Touchscreens oder andere Vorrichtung vorgesehen sein.

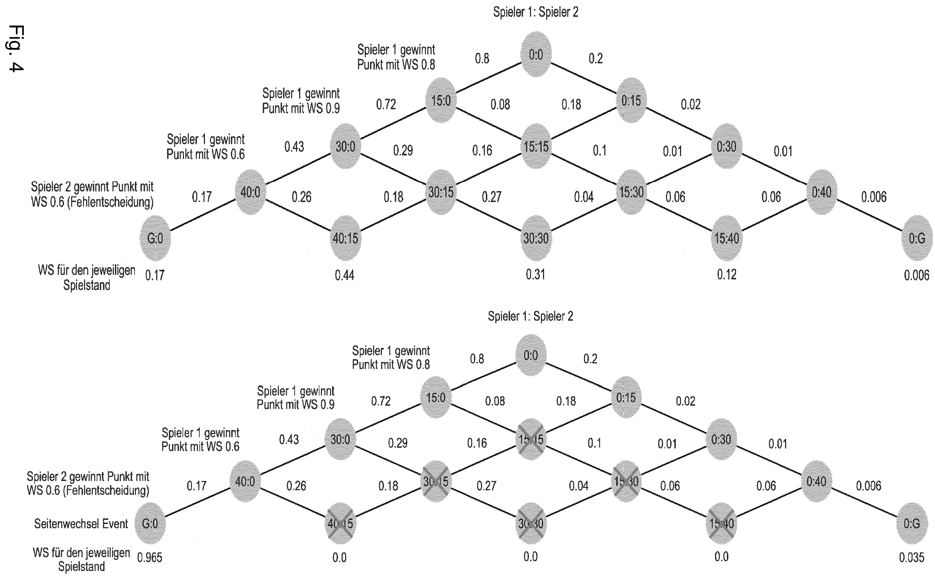

In einer Ausführungsform der vorliegenden Erfindung wird ein Ergebnisbaum, ein sogenannter "Scoring Tree" erzeugt. Dieser Ergebnisbaum wird anhand von Daten aus Ereignissen im Spiel und dem Spielverlauf erzeugt. Die Erstellung des Scoring Trees erfolgt mittels eines Computers und wird auf einem geeigneten Speichermedium gespeichert. Geeignete Speichermedien umfassen hierbei interne und externe Speicher, wie beispielsweise Cloudspeicher, Netzwerkspeicher und/oder Festplattenspeicher. Jedes Ereignis erzeugt im Scoring Tree einen korrespondieren Datensatz, der das Ereignis festlegt. Auf Grundlage dieses Ereignisses und vorzugsweise unter Hinzuziehung der Gegebenheiten wird der potentielle weitere Spielverlauf ermittelt. Dieser kann auf dazu geeigneten Vorrichtungen, wie Smartphones, Bildschirmen, Computern, Laptops, Tablets und ähnlichen Vorrichtungen angezeigt werden. Nach Beendigung des Matches enthält der Scoring Tree somit alle potentiellen Spielstände zu jedem Zeitpunkt des Spiels, wobei jeder Spielstand eine Wahrscheinlichkeit besitzt, die seine Plausibilität beschreibt. Es erfolgt eine Prüfung auf Verträglichkeit aller möglichen Spielstände mit den detektierten Ereignissen. Dabei wird überprüft, ob ein Spielstand vor dem Hintergrund der detektierten Ereignisse überhaupt möglich ist oder nicht. In Fig. 4 wird anhand eines Spielverlaufs im Tennis beispielhaft gezeigt, wie zunächst die vorhandenen Ergebnisse im Scoring Tree auf Verträglichkeit mit dem Ereignis "Seitenwechsel" überprüft werden und im Anschluss die Plausibilität der übriggebliebenen Spielstände anhand der verbleibenden Wahrscheinlichkeit berechnet wird. Plausibilität beschreibt dabei die Stimmigkeit oder Richtigkeit der Aussagen und dient als Beurteilungskriterium zwischen den realen ermittelten Werten und den berechneten Werten. Durch den Verlauf des Matches und die darin auftretenden Ereignisse werden die potenziell möglichen Spielstände in einer Ausführungsform in realer Zeit eingegrenzt und das Ergebnis des Spielendes entsprechend korrigiert. Bei Events im Hinblick auf den Seitenwechsel im Tennis ist beispielsweise nur eine ungerade Anzahl an beendeten Spiele möglich, wie 0:1, 2:1, 0:3 usw. Bei einem Aufschlagseitenwechsel hingegen ist beispielsweise nur eine gerade Anzahl an beendeten Spielen möglich, wie 0:2, 1:1, 4:0 usw. In einer bevorzugten Ausführungsform der vorliegenden Erfindung werden daher potentielle Spielstände, die nicht die Bedingungen eines realen Ereignisses auf dem Spielfeld erfüllen, aus dem Scoring Tree gelöscht. Entsprechende weitere potentielle Spielstände werden nach dem Löschvorgang im Verhältnis der Wahrscheinlichkeiten angepasst, sodass die Gesamtwahrscheinlichkeit 100% ergibt. Der Vorteil an diesem Verfahren ist, dass das Spielergebnis nicht mehr von den Einzelentscheidungen auf Punkteebene abhängig ist, sondern im Nachhinein durch die Schlüsselereignisse korrigiert werden kann. In einer besonders bevorzugten Ausführungsform wird der Spielverlauf nur dann als "falsch" vom System erfasst, wenn die Mehrheit der Einzelentscheidungen falsch ist. Bei einer Mehrheit handelt es sich um über 50 % der Entscheidungen, vorzugsweise über 60% der Entscheidungen, besonders bevorzugt über 70 %.

In einer Ausführungsform werden im Hinblick auf die Erkennung des Feldes, der mindestens einen Person, des mindestens einen Gegenstandes, der Kurven und der Ereignisse auf dem Spielfeld sowie dem Backward Scoring werden durch das automatische Trackingverfahren punktgenaue Spielstände erfasst, bei denen dazugehörigen Statistiken, wie beispielsweise Error, Winner, Ass oder Doppelfehler erkannt werden und mit der Spielerposition sowie der Schlagart in Verbindung gebracht werden können. In einer Ausführungsform der Erfindung umfasst das Verfahren Befehle, folgende Schritte: a) Bestimmen eines Ereignisses A; b) Abgleichen des Ereignisses mit der Spielerposition und/oder mit der Schlagart; c) Übermittlung der Daten an eine bildgebende Vorrichtung.

In einer Ausführungsform der vorliegenden Erfindung werden alle Bildinformationsdaten aus lediglich einem Videobild extrahiert, d.h. das jeder Bildinformationspunkt durch eine einzige Kamera aufgenommen wird. Ein dreidimensionales Modell ist hierfür nicht notwendig. Um die vielfältigen Ereignisse, wie beispielsweise Schläge im Tennis, zuverlässig erkennen zu können, sind üblicherweise verschiedene Bilder und/oder Perspektiven notwendig, um eine bestimmte Art, wie Vorhand, Rückhand, Aufschlag, Volley, Topspin, Flat oder Slice, zu bestimmen. Um diese Notwendigkeit zu umgehen, wird in einer Ausführungsform eine Datenbank mit Bildern von bereits kategorisierten Ereignissen, wie z.B. beim Tennis von Tennisschlägen aus einer Kamera mit vorbestimmter Position, erstellt. Die durch die mit vorbestimmter Positionierung erhaltenen Bildpunkte und Daten sowie dazugehörigen Schläge werden in einem nächsten Schritt kategorisiert. Mit den daraus generierten Daten wird ein sogenanntes Convolutional Neural Network CNN) erschaffen, d.h. ein künstliches neuronales Netzwerk. Bei diesem CNN erfolgt der Input in das Netzwerk über Pixel die in einem bestimmten Punkt die in einem bestimmten Neuron, gespeichert werden. Diese künstlichen generierten Neuronen werden zu einem künstlichen neuronalen Netz miteinander verbundenen, sodass diese Nachrichten untereinander austauschen können. Die Verbindungen der Neuronen und/oder Netzwerke weisen eine numerische Gewichtung auf, die während des Trainingsprozesses angepasst wird, sodass ein korrekt trainiertes Netzwerk bei einem zu erkennenden Bild oder Muster richtig reagiert, siehe hierfür beispielsweise Bengio, Y & Lecun, Yann. (1997). Convolutional Networks for Images, Speech, and Time-Series, wie bereits zuvor beschrieben.

Mithilfe der generierten Daten und der einfachen Erkennung mithilfe lediglich eines Bildes oder eines Videos aus einer einzigen Kameraposition, lassen sich vernetzte Spielfelder innerhalb kürzester Zeit schaffen und erlauben dem Spieler Match-Statistiken, Punkt-für-Punkt- Videoanalysen und/oder persönliches Coaching basierend auf dem tatsächlichen Spielverlauf zu erhalten. Um den korrekten Spielverlauf abzubilden, sind, wie zuvor dargestellt, Entscheidungen vom Verhalten des Spielers und des dazugehörigen Gegenstandes, bzw. Balles abhängig und werden nicht lediglich durch ein System berechnet. Das beschriebene System ist daher in der Lage korrekte, punktbasierte Statistiken zu generieren, auch wenn sich die Entscheidungen von Spieler und System zunächst unterscheiden.

In einer Ausführungsform der vorliegenden Erfindung werden die generierten Daten auf ein oder mehrere Vorrichtungen übertragen, diese können umfassen, sind jedoch nicht beschränkt auf, Smartphones, Tablets, Bildschirme, Monitore, Fernseher, und/oder Computer. Um ein individuelles Training zu schaffen befinden sich in einer bevorzugten Ausführungsform der vorliegenden Erfindung an jedem Spielfeld jeweils hierfür spezifische Codes, die beispielsweise mithilfe eines Smartphones oder einer darauf befindlichen zugehörigen Applikation (App) gescannt werden können. Mit diesem kann sich der Spieler auf dem Feld einloggen, dieses nutzen und seine Daten analysieren lassen. Hierfür werden in einer Ausführungsform die Daten nach dem Match auf einen externen Speicher hochgeladen, in welchem der Spieler diese ansehen kann. Dieser Speicher kann ein Cloudbasierter Dienst sein, ein Netzwerk, ein Smartphone, ein Computer oder ähnliche Vorrichtungen oder Kombinationen sein, die zur Speicherung und Wiedergabe der Daten geeignet sind.

Die Daten für das oben aufgezeigte Verfahren werden mithilfe einer Vorrichtung generiert, die ein Bildaufnahmesystem umfasst. Dieses Bildaufnahmesystem besteht aus mindestens einer Kamera, die derart angeordnet ist, dass das ganze Spielfeld erfasst wird. Dadurch können Bilddaten vom ganzen Spielfeld generiert und bestimmt werden. In einer bevorzugten Ausführungsform werden Bilddaten von zwei Kameras extrahiert, wobei eine Kamera auf eine erste Seite des Spielfeldes gerichtet ist, beispielsweise auf die linke Spielfeldseite und die zweite Kamera auf eine zweite Spielfeldseite, beispielsweise die rechte Platzhälfte. Die mindestens eine Kamera ist an einem vorbestimmten Ort montiert. Bei dem Ort handelt es sich vorzugsweise um den Netzpfosten, in welchen die Kamera integriert angeordnet ist. In einer weiteren Ausführungsform kann zusätzliche eine Kamera, wie zum Beispiel eine Netzwerkkamera vorgesehen sein. Diese kann beispielsweise hinter der Grundlinie angeordnet werden. Dieses zusätzliche Videomaterial kann für spätere Analysen durch Spieler und Trainer erhoben werden.

Die Daten der mindestens einen Kamera werden mittels eines Übertragungsmoduls an ein Rechenmodul und/oder einen Speicher übermittelt. Bei dem Übertragungsmodul kann es sich um eine kabelgebundene oder kabellose Verbindung handeln. In einer bevorzugten Ausführungsform handelt es sich um eine kabelgebundene Variante.

Die Recheneinheit umfasst hierbei Module, die Schritte des oben ausgeführten Verfahrens ausführen. Die Recheneinheit umfasst daher mindestens ein Modul zur Spielfeldermittlung, mindestens ein Modul zur Personenerkennung, mindestens ein Modul zur Gegenstandsbestimmung, mindestens ein Modul zur Kurvenerkennung, mindestens ein Modul zur Ereignisidentifizierung, und mindestens ein Modul zur ereignisbasierten Ergebnisermittlung.

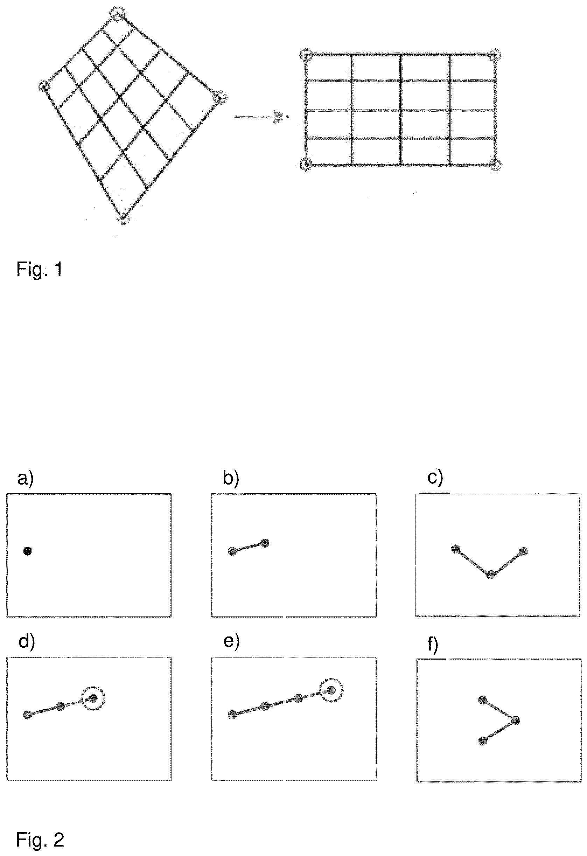

Das mindestens eine Modul zur Spielfeldermittlung bestimmt hierbei die Position, Größe, Ausmaße des Spielfeldes. Hierfür werden zunächst Bilddaten mindestens einer Kamera auf das Modul von einer Übertragungseinheit übertragen. In einem weiteren Schritt wird innerhalb des Felderkennungsmoduls eine Kalibrierung durchgeführt, wobei einzelnen Punkte in einem zweidimensionalen (2D)-Bild einem bestimmten Punkt in einem zweidimensionalen (2D) Modell des Spielfeldes zugeordnet werden, wie beispielsweise der Fig. 1 zu entnehmen ist. Die Kalibrierung erfolgt vorzugsweise über eine Homographiematrix, in welcher mindestens vier Punkte verwendet werden, die im Bild und dem Modell korrelieren, besonders bevorzugt handelt es sich um vier Eckpunkte des Spielfeldes.

Das mindestens eine Modul zur Erkennung von Personen auf dem Spielfeld bestimmt Spieler oder andere Objekte auf dem Spielfeld, wie bereits zum Verfahren beschrieben. Hierfür werden zunächst Bilddaten mindestens einer Kamera auf das Modul von einer Übertragungseinheit übertragen. In einem weiteren Schritt Erzeugung mindestens eines Hintergrundbildes eines leeren Spielfeldes. Im folgenden Schritt wird ein Hintergrundmodell erstellt. Hierfür wird zunächst mindestens ein Bild des leeren Spielfeldes aufgenommen. Im weiteren Schritt wird mit diesem Hintergrundbild, d.h. dem leeren Spielfeld, mit dem bekannten "Mixture of Gaussians Background Subtractor" initialisiert und ein Hintergrundmodell errechnet, welches sich über die Dauer der Laufzeit des Verfahrens regelmäßig aktualisiert. Dieser Subtractor wird genutzt, um Objekte im Vordergrund und Hintergrund eines Bildes zu trennen und einer Überprüfung bezüglich ihrer Form durchzuführen. Die Trennung jedes neu aufgenommene Bild erfolgt durch die Bildung der absoluten Differenz mit dem Hintergrundmodell. Die generierten Daten werden genutzt, um eine Vordergrundmaske zu erstellen. In einer bevorzugten Ausführungsform weist sie die Eigenschaft auf, dass alle zum Vordergrund gehörenden Pixel den Wert 255 und die Pixel des Hintergrundes den Wert 0 besitzen, wobei vorzugsweise Pixel bei denen die Differenz größer als ein festgelegter Grenzwert ist als Vordergrund und Pixel mit geringerer Differenz werden als Hintergrund bestimmt werden.

Das mindestens eine Modul zur Erkennung von Gegenständen, wie beispielsweise Bällen, auf dem Spielfeld identifiziert Bewegungen auf einem jeden aufgenommenen Bild. Hierbei müssen zunächst Bilddaten von einer Kamera über das Übertragungsmodul, oder ein vorheriges Modul auf das Gegenstandserkennungsmodul übermittelt werden. In den folgenden Schritten werden zunächst Differenzenbilder von aufeinanderfolgenden Bildern erstellt und daraus absolute Differenzenbilder, bei denen eine Bewegung an zwei Stellen im Differenzenbild sichtbar ist, errechnet. In einer bevorzugten Ausführungsform handelt es sich bei den beiden Stellen um eine erste Position, an der sich der Ball im vorherigen Bild befunden hat und eine zweite Position, an der der Ball sich im aktuellen Bild befindet. Im Folgenden wird eine erste Bewegungsmaske für das eine erste Differenzbild und einer zweiten Bewegungsmaske für das eine zweite Differenzbild erzeugt. Diese werden zur Ermittlung einer finalen Bewegungsmaske genutzt, welche beide Bewegungen zusammenfasst. Vorzugsweise erfolgt die Konjunktion der einzelnen Pixel beider Bewegungsmasken mit einem bitweisen UND-Operator.

Das Modul zur Kurvenerkennung verwendet, wie die Module zuvor, Bilddaten aus mindestens einer Kamera, die mittels eines vorherigen Moduls oder des Übertragungsmoduls an dieses übermittelt wurden. Hierbei werden zunächst potentielle Startpunkte einer Kurve festgelegt. Diese werden mit allen potenziellen Gegenständen des zeitlich folgenden Bildes kombiniert und es wird für einen jeden Gegenstandes überprüft, ob eine bereits vorhandene Kurve fortgeführt wird. Anhand dieser Daten werden Positionen des Gegenstandes auf einander folgenden Bildern ermittelt. Im anschließenden Schritt werden die beiden Kurven miteinander verglichen und der Kurvenverlauf bestimmt. Auf Basis dieses Kurvenverlaufs erfolgt die Klassifizierung der Kurve, vorzugsweise unter Berücksichtigung der auf die Kurve folgenden nächsten Kurve des Gegenstandes. In einer bevorzugten Ausführungsform werden Bildpunkte von Gegenständen, die mit Bildpunkten von Personen korrelieren, nicht berücksichtigt.

Das Modul zur Identifizierung von Ereignissen im Spielverlauf vergleicht die mindestens eine Position mindestens einer Person und eines Gegenstandes mit dem Spielfeldmodell. Hierfür kommuniziert das Modul mit einem der vorherigen Module und/oder einem Speicher auf welchen die eines der vorhergehenden Module ermittelten Daten übertragen und gespeichert hat. Anhand dieser Daten gleicht das Modul zur Identifizierung von Ereignissen diese mit Datenbanken ab, um das Ereignis zu identifizieren. Hierfür kann das Modul mit einer Vielzahl von Datenbanken oder Informationsspeichern, mit denen es in Verbindung steht, kommunizieren. In einer Ausführungsform werden zusätzlich im Vorfeld antrainierte künstliche Intelligenzen genutzt, um die Ereignisse zu klassifizieren. In einer bevorzugten Ausführungsform handelt es sich hierbei um ein Convolutional Neural Network (CNN).

Das Modul zur ereignisorientierten Ergebniserfassung der vorliegenden Vorrichtung korrigiert den im Verlauf des Spiels berechneten Spielstand mittels Überprüfung der Möglichkeiten aller möglichen Spielstände mit den realen von den vorherigen Modulen erkannten Ereignissen. Hierfür sind die Module direkt oder indirekt miteinander verbunden und/oder die Datenerhebung für die benötigten Informationen erfolgt über einen Speicher, der alle generierten Daten aus einem der vorherigen Module sichert. In einer bevorzugten Ausführungsform erfolgt die Anpassung potentielle Spielstände im Verhältnis der Wahrscheinlichkeiten, sodass die Gesamtwahrscheinlichkeit 100% ergibt.

Auf dem Rechenmodul, wie beispielsweise einem Computer, wird das zuvor beschriebene Verfahren oder zumindest ein Teil dieses Verfahrens zur Objektverfolgung auf einem Spielfeld umfassend, die Felderkennung, die Objekterkennung, die Gegenstandserkennung, die Kurvenerkennung, die Ereigniserkennung und das Backward-Scoring implementiert. Daher betrifft vorliegende Erfindung weiterhin ein Computerprogramm zum Durchführen eines zuvor beschriebenen Verfahrens, wenn das Computerprogramm auf einem Computer ausgeführt wird.

Beim Implementieren des Verfahrens werden zumindest einige der zu dem Verfahren gehörenden Schritte durch einen Prozessor durch Ausführung von Anweisungen durchgeführt. In einer weiteren Ausführungsform können Anweisungen oder ein Teil der Anweisungen zur Ausführung des beschriebenen Verfahrens und/oder zur Implementierung des beschriebenen Verfahrens in ein System auf einem nichttransitorischen, computerlesbaren Datenträger gespeichert werden.

Die Vorrichtung der vorliegenden Erfindung kann eine Vielzahl von identischen und/oder unterschiedlichen Modulen umfassen. Als Module werden auch "Komponenten" oder "Funktionseinheiten" bezeichnet. Darüber hinaus können Module und/oder Komponenten auch "computerausgeführt" und/oder "computerimplementiert" sein. Die Module werden hierbei im Rahmen eines Computersystems implementiert, das typischerweise einen Prozessor und einen Speicher umfasst. Im Allgemeinen ist ein Modul eine Komponente eines Systems, das bestimmte Operationen für die Implementierung einer bestimmten Funktionalität ausführt. Beispiele für Funktionalitäten umfassen den Empfang von Messwerten (wie beispielsweise Bilddaten oder die Berechnung des Feldes mittels eines Berechnungsmoduls. Die Module können jedoch auch weitere in den obigen Ausführungsformen zum Verfahren beschriebene Funktionalitäten besitzen.

Der Begriff "Modul" umfasst hier eine greifbare Entität, die physisch konstruiert ist, dauerhaft konfiguriert ist (z. B. festverdrahtet) oder temporär konfiguriert ist (z. B. programmiert), um auf eine bestimmte Weise zu operieren oder bestimmte hierin beschriebene Operationen auszuführen. In Ausführungsformen, in denen die Module temporär konfiguriert (z. B. programmiert) sind, muss nicht jedes Modul zu jedem Zeitpunkt konfiguriert oder instanziiert werden. Beispielsweise kann ein allgemeiner Prozessor derart konfiguriert sein, dass er verschiedene Module zu unterschiedlichen Zeiten ausführt. In einigen Ausführungsformen implementiert ein Prozessor ein Modul durch Ausführung von Anweisungen, die zumindest ein Teil der Funktionalität des Moduls implementieren. Optional kann ein Speicher die Anweisungen (z. B. als Computer-Code) speichern, die durch den Prozessor gelesen und verarbeitet werden und bewirken, dass der Prozessor zumindest einige an der Implementierung der Funktionalität des Moduls beteiligte Operationen durchführt.

Zusätzlich oder alternativ kann ein Speicher, der in oder mehrere Speichergeräte umfassen kann, in einer Ausführungsform Daten speichern, die durch den Prozessor gelesen und verarbeitet werden, um zumindest einen Teil der Funktionalität des Moduls zu implementieren. Der Speicher kann in einer weiteren Ausführungsform ein oder mehrere Hardware-Elemente umfassen, die Informationen speichern können, die für einen Prozessor zugänglich sind. Der Speicher kann in einer Ausführungsform zumindest teilweise als ein Teil des Prozessors oder als auf demselben Chip wie der Prozessor befindlich sein und/ oder ein vom Prozessor separates materielles Element sein.

Der mindestens eine Prozessor führt in einer Ausführungsform auf dem Speicher gespeicherte Anweisungen aus, die an der Implementierung der Funktionalität eines bestimmten Moduls beteiligte Operationen durchführen. Der mindestens eine Prozessor kann zudem derart operieren, dass die Leistung der relevanten Operationen in einer Umgebung mit "Cloud-Computing" oder als "Software-as-a-Service" (SaaS) unterstützt wird. Zum Beispiel können zumindest einige der an der Implementierung eines Moduls beteiligten Operationen durch eine Gruppe von Computern durchgeführt werden, die über ein Netzwerk, wie beispielsweise das Internet und/oder über eine oder mehrere entsprechende Schnittstellen, wie Anwendungsprogramm-Schnittstellen (API) zugänglich sind. Optional können einige der Module in einer verteilten Weise zwischen mehreren Prozessoren ausgeführt werden. Der mindestens eine Prozessor kann sich in einer Ausführungsform an einem geographischen Ort befinden oder auf mehrere geographische Orte verteilt sein. Optional können einige Module die Ausführung von Anweisungen auf Geräten umfassen, die zu den Benutzern gehören und/oder sich neben den Spielern oder Zuschauern befinden.

Beispielsweise können Verfahren, die eine beispielsweise eine Präsentation von Ergebnissen umfassen, teilweise oder vollständig auf Prozessoren ausgeführt werden, die zu Geräten der Spieler gehören. Diese Geräte sind beispielsweise Laptops, Tablets, Smartphones, jedoch ist diese Auflistung nicht begrenzt auf die aufgelisteten, sondern kann jedes bekannte Gerät umfassen. Weiterhin können Daten in einer Ausführungsform zu cloudbasierten Servern hochgeladen werden. In einigen Ausführungsformen können Module anderen Modulen Informationen bereitstellen und/ oder Informationen von anderen Modulen empfangen. Entsprechend können solche Module als kommunikativ gekoppelt gelten. Wenn mehrere solcher Module gleichzeitig vorhanden sind, können Kommunikationen durch Signalübertragung erreicht werden. In Ausführungsformen, in denen Module zu unterschiedlichen Zeiten konfiguriert oder instanziiert werden, können Kommunikationen zwischen solchen Modulen beispielsweise durch das Speichern und Abrufen von Informationen in Speicherstrukturen, auf die mehrere Module zugreifen können, erreicht werden. In einer Ausführungsform kann ein Modul eine Operation ausführen und den Output dieser Operation auf einem Speichergerät speichern, mit dem es kommunikativ gekoppelt ist. Ein anderes Modul kann dann zu einem späteren Zeitpunkt auf das Speichergerät zugreifen, um das gespeicherte Output abzurufen und zu verarbeiten.

In diesem Zusammenhang betrifft die vorliegende Erfindung weiterhin ein Computerprogrammprodukt mit einem Speichermedium, auf dem ein Computerprogramm gespeichert ist, dass das zuvor beschriebene Verfahren zur Spielverfolgung umfassend die Felderkennung, die Personenerkennung, die Gegenstandserkennung, die Kurvenerkennung, die Ereigniserkennung und das Backward-Scoring umfasst. In einer bevorzugten Ausführungsform ist das Computerprodukt direkt in den internen Speicher eines digitalen Computers geladen und umfasst Softwarecodeabschnitte, mit denen die Schritte der Spielverfolgung ausgeführt werden, wenn das Produkt auf einem Computer läuft. Der Begriff Computerprogrammprodukt umfasst hierbei ein auf einem Träger gespeichertes Computerprogramm, wie beispielsweise RAM, ROM, CD, Geräte und ähnliche Vorrichtungen; ein Embedded System als umfassendes System mit einem Computerprogramm, wie beispielsweise ein elektronisches Gerät mit einem Computerprogram; ein Netzwerk von computerimplementierten Computerprogrammen, wie beispielsweise Serversysteme, Client-Systeme, Cloud Computing Systeme und ähnliche; und/oder Computer auf denen ein Computerprogramm geladen ist, abläuft, gespeichert ist, ausgeführt wird oder entwickelt wird.

Obgleich die hierin offengelegten Methoden mit Bezug auf bestimmte, in einer bestimmten Reihenfolge durchgeführte Schritte beschrieben und dargestellt werden können, ist davon auszugehen, dass diese Schritte zur Bildung einer äquivalenten Methode ohne Abweichung von den Lehren der Ausführungsformen kombiniert, unterteilt und/oder umgeordnet werden können. Entsprechend, sofern nicht ausdrücklich hierin angegeben, stellen die Reihenfolge und Gruppierung der Schritte keine Einschränkung der Ausführungsformen dar. Darüber hinaus werden die Methoden und Mechanismen der Ausführungsformen aus Gründen der Übersichtlichkeit in einigen Fällen in der Singularform beschrieben. Jedoch können einige Ausführungsformen, sofern nicht anders angegeben, mehrere Iterationen einer Methode oder mehrere Instanziierungen eines Mechanismus umfassen. Wenn beispielsweise ein Prozessor in einer Ausführungsform offengelegt wird, soll der Anwendungsbereich der Ausführungsform auch die Verwendung mehrerer Prozessoren abdecken. Bestimmte Merkmale der Ausführungsformen, die möglicherweise aus Gründen der Übersichtlichkeit im Kontext separater Ausführungsformen beschrieben wurden, können zudem in verschiedenen Kombinationen in einer einzigen Ausführungsform bereitgestellt werden. Umgekehrt können verschiedene Merkmale der Ausführungsformen, die möglicherweise aus Platzgründen im Kontext einer einzigen Ausführungsform beschrieben wurden, zudem separat. oder in jedweder geeigneten Unterkombination bereitgestellt werden.

In einer weiteren Ausführungsform können die Verfahren und Programme mit verschiedenen Computersystemkonfigurationen ausgeführt werden. Diese Computersysteme umfassen sind jedoch nicht beschränkt auf Cloud- Computing, Client-Server-Modelle, Grid-Computing, Peer-to-Peer, Handheld-Geräte, Multiprozessor- Systeme, mikroprozessorbasierte Systeme, programmierbare Unterhaltungselektronik, Minicomputer und/oder Großrechner. Zusätzlich oder alternativ können einige der Ausführungsformen in einer verteilten Computerumgebung ausgeübt werden, in der die Aufgaben durch Fernbearbeitungsgeräte durchgeführt werden, die über ein Kommunikationsnetz verbunden sind. In einer verteilten Computerumgebung können Programmkomponenten in sowohl lokalen und als auch entfernten Computer und/ oder Speichergeräten lokalisiert sein. Zusätzlich oder alternativ können einige der Ausführungsformen in Form eines Dienstes wie Infrastructure-as-a-Service (IaaS), Platform-as-a-Service (PaaS), Software-as-a-Service (SaaS) und/oder Network-as-a-Service (NaaS) ausgeübt werden.

Diese und andere Ausführungsformen der vorliegenden Erfindung werden in der Beschreibung und den Beispielen offenbart und sind durch diese umfasst. Die in der vorstehenden Beschreibung und in den Ansprüchen genannten Merkmale sind weiterhin in einer beliebigen Auswahl kombinierbar und die im Rahmen der Erfindung sinnvollen Merkmalskombinationen als offenbart zu betrachten. Weitere Literatur über eine bekannte der Materialien, Verfahren und Anwendungen, die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren und Beispiele erhalten werden, die zum Zweck der Illustration bereitgestellt wurden und den Umfang der Erfindung nicht beschränken sollen.

### Beispiele

### Beispiel: Programmablauf für das Backward Scoring am Beispiel Tennis

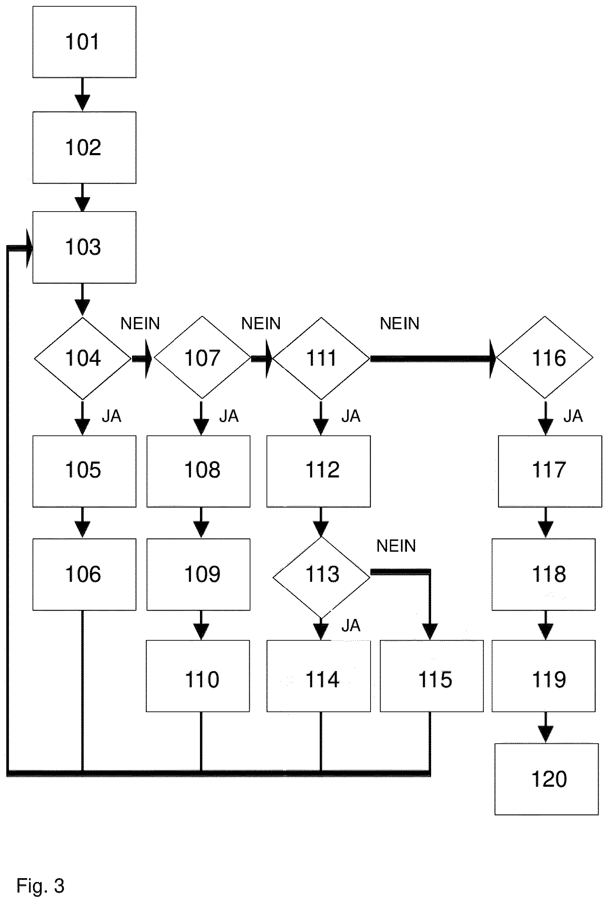

In Fig. 3 ist ein Programmablauf für das Backward Scoring am Beispiel eines Tennisspiels dargestellt. Hierbei wird zunächst eine Liste mit detektierten Ereignissen bereitgestellt (101, welche zuvor durch Datenermittlung erzeugt wurde. Im weiteren Schritt (102) wir ein leerer Scoring Tree ("Zählbaum") initialisiert. In diesem werden die einzelnen Ereignisse verarbeitet (103). Es folgt die Bestimmung eines Ballwechsels (104). Erfolgte ein Ballwechsel, so werden im folgenden Schritt (105) alle potentiellen Spielstände, die sich aus diesem Ballwechsel ergeben haben bestimmt. Der Scoring tree wird nach dem entsprechenden Spielstand aktualisiert und neue "Blätter" werden angefügt (106).

Erfolgte kein Ballwechsel wird bestimmt, ob ein Ende des Ballwechsels bestimmt werden kann (107). Erfolgte ein Ende, wird im folgenden Schritt (108) die Wahrscheinlichkeit für den Ausgang des Ballwechsels berechnet. Die berechnete Wahrscheinlichkeit wird bei den Blättern des Scoring trees vermerkt (109) und die Gesamtwahrscheinlichkeit für jeden Spielstand aktualisiert (110).

Erfolgte kein Ballwechsel, wird bestimmt, ob ein Ende des Spieles stattgefunden hat (111). Wurde ein Ende detektiert, so werden alle Spielstände mit unvollständigen Spielen aus dem Scoring tree entfernt (112). Im nächsten Schritt wird der Seitenwechsel identifiziert (113). Erfolgte ein Seitenwechsel, so werden alle Spielstände mit einer geraden Anzahl an Spielen aus dem Scoring tree entfernt (114). Wird jedoch kein Seitenwechsel detektiert, werden alle Spielstände mit einer ungeraden Anzahl an Spielen aus dem Scoring tree entfernt (115).

Wurde kein Ende des Spieles bestimmt, wird überprüft, ob das Match zu Ende ist (116). Ist dies der Fall werden alle Spielstände mit unvollständigen Spielen (117) und Sätzen (118) aus dem Scoring tree entfernt. Im letzten Schritt wird der Spielstand mit der höchsten Wahrscheinlichkeit als Endspielstand bestimmt (119) und als Spielstand ausgegeben (120).

## Patentansprüche

1. Verfahren zur Spielverfolgung umfassend folgende Schritte:
a) Bestimmung des Spielfeldes basierend auf Bilddaten eines Bildaufnahmesystems, durch eine Recheneinheit;
b) Erkennung von mindestens einer Person auf dem Spielfeld basierend auf den Bilddaten des Bildaufnahmesystems, durch die Recheneinheit;
c) Identifizieren von Gegenständen auf dem Spielfeld basierend auf den Bilddaten des Bildaufnahmesystems, durch die Recheneinheit;
d) Bestimmung von mindestens einer Flugkurve eines identifizierten Gegenstandes basierend auf den Bilddaten des Bildaufnahmesystems, durch die Recheneinheit;
**dadurch gekennzeichnet, dass**
durch die Recheneinheit unter Verwendung der Flugkurve mindestens ein Ereignis identifiziert wird, durch welches eine Korrektur der im Spielverlauf berechneten Spielstände mittels Backward-Scoring, ereignisbasierter Ergebnisermittlung, erfolgt und der reale Spielendstand ausgegeben wird; wobei die Korrektur des im Spielverlauf berechneten Spielstandes die folgenden Schritte umfasst:
a) Überwachung der möglichen Spielstände während des Spiels bei welcher anhand von Daten aus Ereignissen im Spiel und dem Spielverlauf ein Ergebnisbaum erzeugt wird, welcher nach Beendigung des Spiels die potentiellen Spielstände des Spiels enthält, wobei jeder Spielstand eine Wahrscheinlichkeit besitzt, die seine Plausibilität beschreibt;
b) Prüfung der Verträglichkeit aller möglichen Spielstände mit den detektierten Ereignissen, bei welcher überprüft wird, ob ein Spielstand vor dem Hintergrund der detektierten Ereignisse möglich ist oder nicht;
c) Prüfung der Plausibilität der verbleibenden Spielstände anhand der Wahrscheinlichkeiten.

2. Verfahren nach Anspruch 1, wobei die Bestimmung des Spielfeldes mittels Kalibrierung erfolgt, wobei einzelnen Punkte in einem zweidimensionalen (2D)-Bild einem bestimmten Punkt in einem zweidimensionalen (2D) Modell des Spielfeldes zugeordnet werden, wobei vorzugsweise die Kalibrierung über eine Homographiematrix erfolgt, in welcher mindestens vier Punkte verwendet werden, die im Bild und dem Modell korrelieren, besonders bevorzugt handelt es sich um vier Eckpunkte des Spielfeldes.

3. Verfahren nach Anspruch 1 oder 2, wobei die Erkennung von Personen auf dem Spielfeld folgende Schritte umfasst
a) Erzeugung mindestens eines Hintergrundbildes eines leeren Spielfeldes;
b) Erzeugen eines Hintergrundmodells;
c) Trennung des jeden Hintergrundbildes von einem jeden aktuell aufgenommenen Bild, welches eine Person umfasst, und in welchem somit ein Objekt anhand Höhe und/oder Breite und/oder Position im Bild als Mensch klassifiziert wurde;
d) Bestimmung einer absoluten Differenz zwischen dem Hintergrundmodel und dem aktuell aufgenommenen Bild, und
e) Erzeugen einer Vordergrundmaske,
wobei die Vordergrundmaske, **dadurch gekennzeichnet ist, dass** alle zum Vordergrund gehörenden Pixel den Wert 255 und die Pixel des Hintergrundes den Wert 0 besitzen, wobei vorzugsweise Pixel bei denen die Differenz größer als ein festgelegter Grenzwert ist als Vordergrund und Pixel mit geringerer Differenz werden als Hintergrund bestimmt werden.

4. Verfahren nach einem der Ansprüche 1 bis 3, wobei der Gegenstand auf dem Spielfeld durch Bewegungen eines jeden aufgenommenen Bildes identifiziert wird, wobei vorzugsweise die Bestimmung der Bewegung folgende Schritte umfasst:
a) Erstellung von Differenzenbilder von aufeinanderfolgenden Bildern;
b) Berechnung von absoluten Differenzenbilder, bei denen eine Bewegung an zwei Stellen im Differenzenbild sichtbar ist, vorzugsweise handelt es sich um eine erste Position, an der sich der Ball im vorherigen Bild befunden hat und eine zweite Position, an der der Ball sich im aktuellen Bild befindet;
c) Erzeugen einer ersten Bewegungsmaske für das eine erste Differenzbild und einer zweiten Bewegungsmaske für das eine zweite Differenzbild; und
d) Erzeugen einer finalen Bewegungsmaske, die die Bewegungen, die in der einen ersten Bewegungsmaske und der einen zweiten Bewegungsmaske umfasst;
vorzugsweise erfolgt die Konjunktion der einzelnen Pixel beider Bewegungsmasken mit einem bitweisen UND-Operator.

5. Verfahren nach einem der Ansprüche 1 bis 4, wobei Flugbahn bzw. die Flugkurve des Gegenstands ermittelt wird, umfassend folgende Schritte:
a) Festsetzen eines ersten und eines zweiten Startpunktes einer potentiellen Kurve;
b) Kombinieren der potenziell festgesetzten Startpunkte mit allen potenziellen Gegenständen des zeitlich folgenden Bildes;
c) Überprüfen eines jeden Gegenstandes, ob eine bereits vorhandene Kurve fortführt wird;
d) Ermitteln von Positionen des Gegenstandes auf einander folgenden Bildern
e) Vergleichen der Kurven aus a) und d);
f) Bestimmen eines Kurvenverlaufs; und
g) Klassifizierung der Kurve durch Bestimmung einer der ersten Kurve folgenden zweiten Kurve,
wobei vorzugsweise Bildpunkte von Gegenständen, die mit Bildpunkten von Personen korrelieren, nicht berücksichtigt werden.

6. Verfahren nach einem der Ansprüche 1 bis 5, wobei die Identifizierung von Ereignissen im Spielverlauf folgende Schritte umfasst:
a) Erfassung eines auslösenden Ereignisses;
b) Vergleich der Position mindestens einer Person und eines Gegenstandes mit dem Spielfeldmodell;
c) Abgleich mit einer Datenbank,
wobei die Ereignisse vorzugsweise in einem vorherigen Schritt in einem kategorisierten Datensatz erfasst worden sind, um den Abgleich mithilfe einer mit diesem Datensatz antrainierten künstlichen Intelligenz durchzuführen.

7. Verfahren nach einem der Ansprüche 1 bis 6, wobei
potenzielle Spielstände, die nicht die Bedingungen eines Ereignisses auf dem Spielfeld erfüllen, aus dem Ereignisbaum gelöscht werden, und die weiteren potenziellen Spielstände nach dem Löschvorgang im Verhältnis der Wahrscheinlichkeiten angepasst werden, sodass die Gesamtwahrscheinlichkeit 100% ergibt.

8. Vorrichtung zur Verfolgung mindestens eines Objektes und Spielers auf einem Spielfeld umfassend:
a) ein Bildaufnahmesystem umfassend
i) mindestens eine Kamera, die derart angeordnet ist, dass das ganze Spielfeld erfasst wird;
ii) mindestens ein Übertragungsmodul, das derart ausgelegt ist, die von der Kamera aufgezeichneten Bilddaten zu speichern und/oder an eine Recheneinheit, einen Speicher, oder System zu übertragen;
wobei die mindestens eine Kamera und das mindestens eine Übertragungsmodul an mindestens einem Netzpfosten angebracht sind;
b) eine Recheneinheit, umfassend Module zur
iii) Spielfeldermittlung basierend auf den Bilddaten;
iv) Personenerkennung basierend auf den Bilddaten;
v) Gegenstandsbestimmung basierend auf den Bilddaten;
vi) Kurvenerkennung basierend auf der Gegenstandsbestimmung;
vii) Ereignisidentifizierung basierend auf der Kurvenerkennung; wobei die Recheneinheit **gekennzeichnet ist durch**
ein Modul zur ereignisbasierten Ergebnisermittlung, welches ausgebildet ist, bei der Korrektur des im Spielverlauf berechneten Spielstandes die folgenden Schritte durchzuführen:
1) Überwachung der möglichen Spielstände während des Spiels bei welcher anhand von Daten aus Ereignissen im Spiel und dem Spielverlauf ein Ergebnisbaum erzeugt wird, welcher nach Beendigung des Spiels die potentiellen Spielstände des Spiels enthält, wobei jeder Spielstand eine Wahrscheinlichkeit besitzt, die seine Plausibilität beschreibt;
2) Prüfung der Verträglichkeit aller möglichen Spielstände mit den detektierten Ereignissen, bei welcher überprüft wird, ob ein Spielstand vor dem Hintergrund der detektierten Ereignisse möglich ist oder nicht;
3) Prüfung der Plausibilität der verbleibenden Spielstände anhand der Wahrscheinlichkeiten.

9. Computerprogramm zum Durchführen eines Verfahrens nach einem der Ansprüche 1 bis 7, wenn das Computerprogramm auf einem Computer ausgeführt wird.

10. Computerprogrammprodukt
a) mit einem Speichermedium, auf dem ein Computerprogramm nach Anspruch 9 gespeichert ist; und/oder
b) das direkt in den internen Speicher eines digitalen Computers geladen werden kann und Softwarecodeabschnitte umfasst mit denen die Schritte gemäß der Ansprüche 1 bis 7 ausgeführt werden, wenn das Produkt auf einem Computer läuft.

## Claims

1. Method for game monitoring, comprising the following steps:
a) determination of the playing field based on image data from an image recording system, by a computing unit;
b) recognition of at least one person on the playing field based on the image data from the image recording system, by the computing unit;
c) identification of objects on the playing field based on the image data from the image recording system, by the computing unit;
d) determination of at least one flight curve of an identified object based on the image data from the image recording system, by the computing unit;
**characterised in that**
the computing unit, using the flight curve, identifies at least one event by means of which the scores calculated in the course of the game are corrected by means of backward scoring, event-based result determination, and the real score is output; the correction of the score calculated in the course of the game comprising the following steps:
a) monitoring the possible scores during the game whereby a results tree is generated on the basis of data from events in the game and the course of the game, which, after completion
of the game, contains the potential scores of the game, each score having a probability describing its plausibility;
b) checking the compatibility of all possible scores with the detected events, whereby checks are performed to ascertain whether a score is possible or not against the background of the detected events;
c) checking the plausibility of the remaining scores on the basis of the probabilities.

2. Method according to claim 1, wherein the determination of the playing field is carried out by means of calibration, wherein individual points in a two-dimensional (2D) image are assigned to a specific point in a two-dimensional (2D) model of the playing field, wherein the calibration is preferably carried out via a homography matrix in which at least four points are used which correlate in the image and the model, particularly preferably four corner points of the playing field.

3. Method according to claim 1 or 2, wherein the detection of persons on the playing field comprises the following steps:
a) generation of at least one background image of an empty playing field;
b) generation of a background model;
c) separation of each background image from each currently recorded image that comprises a person, and in which an object has thus been classified as a human on the basis of height and/or width and/or position in the image;
d) determination of an absolute difference between the background model and the currently recorded image, and
e) generation a foreground mask,
the foreground mask being **characterised in that** all pixels belonging to the foreground have the value 255 and the pixels of the background have the value 0, wherein preferably pixels in which the difference is greater than a fixed limit value are determined as the foreground and pixels with a smaller difference are determined as the background.

4. Method according to any of claims 1 to 3, wherein the object is identified on the playing field by movements of each recorded image, preferably wherein the determination of the movement comprises the following steps:
a) creation of differential images of successive images;
b) calculation of absolute difference images in which a movement is visible at two points in the difference image, preferably a first position in which the ball was located in the previous image and a second position in which the ball is located in the current image;
c) generation of a first movement mask for the first difference image and a second movement mask for the second difference image; and
d) generation of a final movement mask comprising the movements occurring in the first movement mask and the second movement mask;
preferably, the individual pixels of both movement masks are conjugated with a bitwise AND operator.

5. Method according to any of claims 1 to 4, wherein the flight path or flight curve of the object is determined, comprising the following steps:
a) setting a first and second starting point of a potential curve;
b) combining the potentially set starting points with all potential objects of the next image to follow;
c) checking each object to ascertain whether an existing curve is continued;
d) determining positions of the object on consecutive images;
e) comparing the curves from a) and d);
f) determining a curve progression; and
g) classifying the curve by determining a second curve following the first curve,
wherein preferably image points of objects that correlate with image points of persons are not taken into account.

6. Method according to any of claims 1 to 5, wherein the identification of events in the course of the game comprises the following steps:
a) capture of a triggering event;
b) comparison of the position of at least one person and one object with the playing field model;
c) reconciliation with a database,
wherein the events have preferably been captured in a categorised data set in a previous step in order to carry out the reconciliation using an artificial intelligence trained with this data set.

7. Method according to any of claims 1 to 6, wherein
potential scores that do not meet the conditions of an event on the playing field are deleted from the events tree, and the further potential scores after the deletion process are adjusted in relation to the probabilities, so that the total probability is 100%.

8. Device for monitoring at least one object and player on a playing field, comprising:
a) an image recording system, comprising
i) at least one camera arranged in such a way that the entire playing field is captured;
ii) at least one transmission module designed to store the image data recorded by the camera and/or to transmit it to a computing unit, a memory, or system;
wherein the at least one camera and the at least one transmission module are attached to at least one net post;
b) a computing unit, comprising modules for
iii) playing field determination based on the image data;
iv) person recognition based on the image data;
v) object determination based on the image data;
vi) curve recognition based on the object determination;
vii) event identification based on the curve recognition; wherein the computing unit is **characterised by**
a module for event-based result determination, which is designed to perform the following steps when correcting the score calculated in the course of the game:
1) monitoring the possible scores during the game whereby a results tree is generated on the basis of data from events in the game and the course of the game, which, after completion of the game, contains the potential scores of the game, each score having a probability describing its plausibility;
2) checking the compatibility of all possible scores with the detected events, whereby checks are performed to ascertain whether a score is possible or not against the background of the detected events;
3) checking the plausibility of the remaining scores on the basis of the probabilities.

9. Computer program for performing a method according to any of claims 1 to 7 when said computer program is run on a computer.

10. Computer program product
a) with a storage medium on which a computer program according to claim 9 is stored; and/or
b) that can be loaded directly into the internal memory of a digital computer and comprises software code sections with which the steps according to claims 1 to 7 are performed when the product runs on a computer.

## Revendications

1. Procédé de suivi de jeu comprenant les étapes suivantes :
a) détermination du terrain de jeu sur la base des données d'image d'un système de capture d'images, au moyen d'une unité de calcul ;
b) détection d'au moins une personne sur le terrain de jeu sur la base des données d'image du système de capture d'images, au moyen de l'unité de calcul ;
c) identification des objets sur le terrain de jeu sur la base des données d'image du système de capture d'images, au moyen de l'unité de calcul ;
d) détermination d'au moins une courbe de vol d'un objet identifié sur la base des données d'image du système de capture d'images, au moyen de l'unité de calcul ;
**caractérisé en ce que**
l'unité de calcul identifie, en utilisant la courbe de vol, au moins un événement par lequel une correction des scores calculés au cours du déroulement du jeu est effectuée au moyen d'un backward-scoring, à savoir une détermination des résultats basée sur des événements, et le score final réel est délivré ; la correction du score calculé au cours du déroulement du jeu comprenant les étapes suivantes :
a) surveillance des scores possibles pendant le jeu, au cours de laquelle un arbre des résultats est généré sur la base des données issues des événements survenant pendant le jeu et du déroulement du jeu, lequel arbre
contient, après la fin du jeu, les scores potentiels du jeu, chaque score étant associé à une probabilité décrivant sa plausibilité ;
b) vérification de la compatibilité de tous les scores possibles avec les événements détectés, au cours de laquelle il est vérifié si un score est possible ou non à la lumière des événements détectés ;
c) vérification de la plausibilité des scores restants sur la base des probabilités.

2. Procédé selon la revendication 1, dans lequel la détermination du terrain de jeu est effectuée au moyen d'une calibration, dans lequel des points individuels dans une image bidimensionnelle (2D) sont affectés à un point spécifique dans un modèle bidimensionnel (2D) du terrain de jeu, dans lequel la calibration est de préférence effectuée au moyen d'une matrice d'homographie, dans laquelle au moins quatre points qui sont en corrélation dans l'image et dans le modèle sont utilisés, de manière particulièrement préférée il s'agit de quatre points d'angle du terrain de jeu.

3. Procédé selon l'une des revendications 1 ou 2, dans lequel la détection de personnes sur le terrain de jeu comprend les étapes suivantes
a) création d'au moins une image de fond d'un terrain de jeu vide ;
b) génération d'un modèle de fond ;
c) dissociation de chaque image de fond de chaque image actuellement capturée, qui comprend une personne et dans laquelle un objet a ainsi été classifié comme étant un être humain en fonction de sa hauteur et/ou de sa largeur et/ou de sa position dans l'image ;
d) détermination d'une différence absolue entre le modèle de fond et l'image actuellement capturée, et
e) création d'un masque de premier plan,
ledit masque de premier plan étant **caractérisé en ce que** tous les pixels appartenant au premier plan présentent la valeur 255 et les pixels de l'arrière-plan présentent la valeur 0, les pixels pour lesquels la différence est supérieure à une valeur limite définie étant de préférence déterminés comme appartenant au premier plan et les pixels présentant une différence inférieure étant déterminés comme appartenant à l'arrière-plan.

4. Procédé selon l'une quelconque des revendications 1 à 3, dans lequel l'objet sur le terrain de jeu est identifié par des mouvements dans chaque image capturée, la détermination du mouvement comprenant de préférence les étapes suivantes :
a) création d'images de différence à partir d'images successives ;
b) calcul des images de différence absolue, dans lesquelles un mouvement est visible à deux endroits dans l'image de différence, il s'agit de préférence d'une première position à laquelle la balle se trouvait dans l'image précédente et d'une seconde position à laquelle la balle se trouve dans l'image actuelle ;
c) création d'un premier masque de mouvement pour la première image de différence et d'un second masque de mouvement pour la seconde image de différence ; et
d) génération d'un masque de mouvement final qui comprend les mouvements se produisant dans le premier masque de mouvement et le second masque de mouvement ;
la conjonction des pixels individuels des deux masques de mouvement s'effectue de préférence avec un opérateur ET bit par bit.

5. Procédé selon l'une quelconque des revendications 1 à 4, dans lequel la trajectoire ou la courbe de vol de l'objet est déterminée, comprenant les étapes suivantes :
a) fixation d'un premier et d'un second point de départ d'une courbe potentielle ;
b) combinaison des points de départ potentiellement fixés avec tous les objets potentiels de l'image suivante sur le plan temporel ;
c) vérification pour chaque objet si une courbe préexistante se poursuit ;
d) détermination des positions de l'objet dans des images successives
e) comparaison des courbes issues de a) et d) ;
f) détermination d'un tracé de courbe ; et
g) classification de la courbe par détermination d'une seconde courbe faisant suite à la première courbe,
dans lequel, de préférence, les points d'image d'objets en corrélation avec les points d'image de personnes ne sont pas pris en compte.

6. Procédé selon l'une quelconque des revendications 1 à 5, dans lequel l'identification d'événements au cours du déroulement du jeu comprend les étapes suivantes :
a) enregistrement d'un événement déclencheur ;
b) comparaison de la position d'au moins une personne et d'un objet avec le modèle de terrain de jeu ;
c) rapprochement avec une base de données,
dans lequel les événements ont de préférence été enregistrés dans un jeu de données catégorisé lors d'une étape précédente afin d'effectuer le rapprochement à l'aide d'une intelligence artificielle entraînée avec ce jeu de données.

7. Procédé selon l'une quelconque des revendications 1 à 6, dans lequel les scores potentiels qui ne remplissent pas les conditions d'un événement sur le terrain de jeu sont supprimés de l'arbre d'événements, et les autres scores potentiels sont ajustés par rapport aux probabilités après la suppression, de sorte que la probabilité totale est de 100%.

8. Dispositif de suivi d'au moins un objet et un joueur sur un terrain de jeu comprenant :
a) un système de capture d'images comprenant
i) au moins une caméra disposée de manière à couvrir l'ensemble du terrain de jeu ;
ii) au moins un module de transmission conçu pour stocker les données d'image enregistrées par la caméra et/ou les transmettre à une unité de calcul, à une mémoire ou à un système ;
dans lequel ladite au moins une caméra et ledit au moins un module de transmission sont montés sur au moins un poteau de filet ;
b) une unité de calcul, comprenant des modules pour
iii) la détermination du terrain de jeu sur la base des données d'image ;
iv) la détection de personnes sur la base des données d'image ;
v) la détermination d'objets sur la base des données d'image ;
vi) la détection de courbes sur la base de la détermination d'objets ;
vii) l'identification d'événements sur la base de la reconnaissance de courbes ; dans lequel l'unité de calcul est **caractérisée par**
un module de détermination de résultats basée sur des événements, qui est conçu pour exécuter les étapes suivantes lors de la correction du score calculé au cours du déroulement du jeu :
1) surveillance des scores possibles pendant le jeu, au cours de laquelle un arbre des résultats est généré sur la base des données issues des événements survenant pendant le jeu et du déroulement du jeu, lequel arbre
contient, après la fin du jeu, les scores potentiels du jeu, chaque score étant associé à une probabilité décrivant sa plausibilité ;
2) vérification de la compatibilité de tous les scores possibles avec les événements détectés, au cours de laquelle il est vérifié si un score est possible ou non à la lumière des événements détectés ;
3) vérification de la plausibilité des scores restants sur la base des probabilités.

9. Programme informatique pour la mise en œuvre d'un procédé selon l'une quelconque des revendications 1 à 7, lorsque ledit programme est exécuté sur un ordinateur.

10. Produit programme informatique
a) avec un support de stockage sur lequel est enregistré un programme informatique selon la revendication 9 ; et/ou
b) qui peut être chargé directement dans la mémoire interne d'un ordinateur numérique et comprend des portions de code logiciel avec lesquelles les étapes sont exécutées selon les revendications 1 à 7 lorsque le produit est exécuté sur un ordinateur.
